# EUROPEAN PATENT SPECIFICATION

(11) **EP 1 939 103 B1**
(45) Date of publication and mention of the grant of the patent: **12.05.2010**
(21) Application number: 06425864.3
(22) Date of filing: 28.12.2006
(51) Int. Cl.: B65D 41/04, B29C 43/18

(54) **Sealing liner for a closure**
Dichtungsscheibe für einen Verschluss
Disque d'étanchéité pour une fermeture

(43) Date of publication of application: 02.07.2008
(73) Proprietor: Guala Closures S.p.A., Alessandria (IT)
(72) Inventor: Battegazzore, Piero, 15100 Alessandria AL (IT)
(74) Representative: Perani, Aurelio

(56) References cited:
- EP-A- 0 987 187
- WO-A-02/057063
- US-A- 3 458 077
- US-A- 5 800 764

## Description

The present invention relates to a coined insert for drawn metal closures in accordance with the preamble to claim 1.

A similar insert is known, for example, from document DE 196 15 019, in the name of ALCOA.

Other prior art documents are EP987187 and US5800764.

EP987187 discloses an insert, according to the preamble of claim 1, comprising a bottom and a resilient closure lip comprising an internal surface inclined outwards.

US5800764 discloses an insert comprising a bottom and a resilient closure lip comprising an outwardly curved internal surface and a curved external surface.

Such inserts are used inside closures, such as for example drawn metal closures for glass containers, for example in the aluminium screw caps put onto bottles of water.

These closures have to provide the seal on the mouth of the bottle, even in the event of the latter containing a gaseous liquid, for example sparkling water; inserts of this kind, made of flexible material, are interposed between the metal of the closure and the mouth of the container, so as to prevent gas from escaping from the interstices existing between the closure and the mouth of the bottle. They therefore constitute a flexible interface between the mouth of the container and the metal of the closure, so as to adapt to the surface roughness of the mouth of the bottle.

Known closures do however have some disadvantages; being produced in very large numbers, during the automatic handling operations in respect of the production and/or application to the bottle, they are subject to continuous mechanical stress, which, given the large production quantities, may damage the closure itself.

In fact, it has proven to be the case that a not insignificant number of closures are damaged in the upper part, in correspondence with the end of the upper planar area, where the metal of the closure curves to create the threaded cylindrical portion of the closure.

This damage, even though slight, may impair the final appearance of the closures. It is therefore necessary to make a closure which, while maintaining the advantages of existing closures, is however more robust in the face of the mechanical stress to which it is subjected during handling in respect of production and/or application to the bottles.

In view of the prior art described, the purpose of the present invention is to make an insert for closures that allows an increase in the resistance of the closures to mechanical stress.

In accordance with the present invention, said purpose is achieved by means of an insert according to claim 1.

The characteristics and advantages of the present invention will become clear from the following detailed description of a practical embodiment, given as a non-restrictive example with reference to the appended drawings, in which:
- figure 1 shows a closure comprising an insert according to a preferred embodiment of the present invention in partial cross-section and partial front view prior to the application of the closure to the container itself;
- figure 2 shows a detail from figure 1, in which the peripheral portion of the insert can be seen;
- figure 3 shows the closure in figure 1 in partial cross-section and partial front view after the application of the closure to the container;
- figure 4 shows a detail from figure 3, in which the peripheral portion of the insert can be seen;
- figures 5a-5c show, respectively, the punch and bush, the internal element and a section of the external bush for producing the insert in figure 1;
- figure 6 shows a detail from figure 5a, in which the peripheral portion of the punch can be seen.

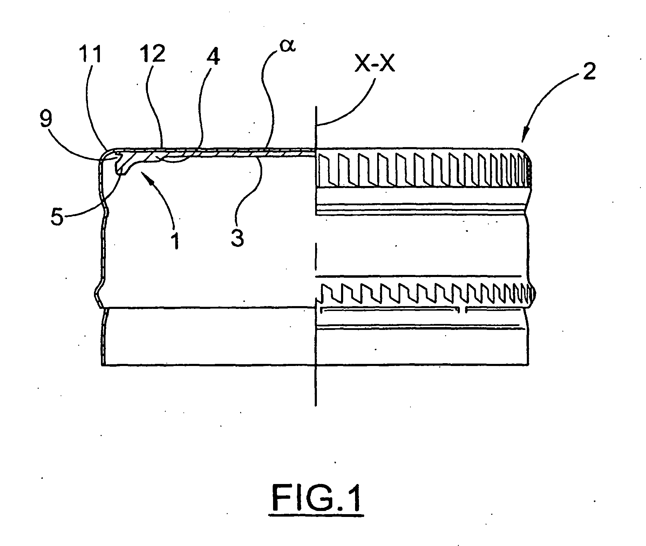

With reference to figures 1-4, α is used to indicate the upper reference surface, substantially planar and coincident with the interface between the insert 1 and the closure 2.

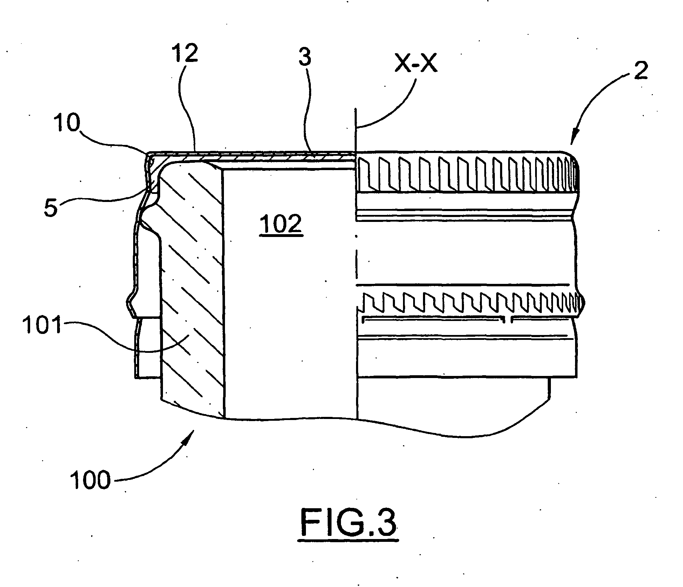

In figure 3, 100 indicates the container, with its mouth indicated as 101 and its neck indicated as 102.

The axis X-X is the longitudinal axis of the container and, when in use, the closure 2 is placed in such a way that axis X-X is substantially perpendicular to the plane α.

The closure 2 is generally of drawn metal, preferably aluminium, adapted to close containers fitted with a neck and an externally threaded mouth, like glass bottles for example. The closure 2 comprises a bottom 3, able to cover the mouth 101 of the container 100. A lateral edge 4, which carries a resilient closure lip 5, is formed around the periphery of the bottom 3.

The resilient closure lip 5 is delimited by an internal surface 6 and an external surface 7; the internal surface 6 is connected to the internal surface of the lateral edge 4, advantageously by means of a joining surface 8.

The external surface 7 of the closure lip 5 is substantially perpendicular to the reference plane α and comprises a groove 9.

The internal surface 6 is inclined outwards, so as to centre the closure 2 relative to the mouth 101 of the container 100. Advantageously, the internal surface 6 is conical and, preferably, the external surface 7 is cylindrical.

The groove 9 may be unbroken, or be substantially annular in shape, or may be broken, for example by webs (not shown in the figures).

According to the invention, the groove 9 is realized at a distance that is not nil from the reference plane α, so as to leave an external protective rim 10.

The external protective rim 10 is defined by the groove 9; when the insert 1 is applied to the closure 2, it adheres to the closure 2 exactly in correspondence with the external end 11 of the plane zone 12 of the closure 2, strengthening it.

Since the insert 1 is made of a polymer material, it has proved to be the case that the protective rim 10 acts as a mechanical dissipator, absorbing the mechanical energy from impacts and dissipating it without the metal sitting over it being damaged.

Since the protective rim 10 adheres to the closure 2 in an area which, during production, is drawn and curved, the groove 9 defines a seat in which the protective rim 10 is able to insert itself during the final phase of application of the closure 2, that is after it has been put on the mouth 101 of the container 100.

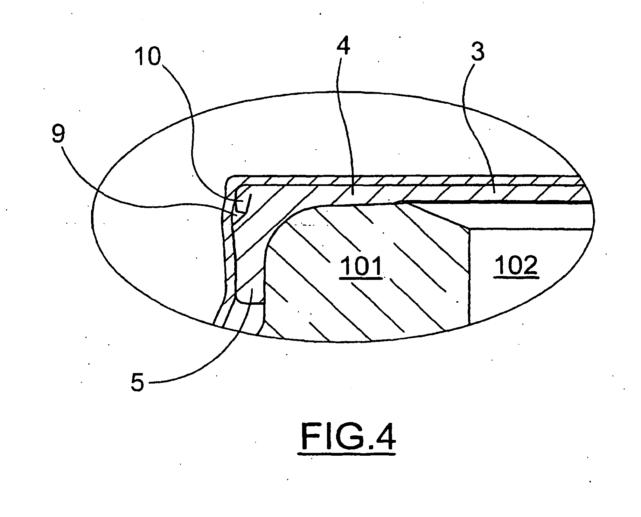

From a comparison of figures 1 and 4 the change in the configuration of the protective rim 10 in the final phases of the application of the closure 2 to the container 100 is clear.

Advantageously, the thickness of the protective rim 10 is smaller than the thickness of the bottom 3; preferably the volume of the protective rim 10 is smaller than the volume defined by the groove 9.

In a preferred embodiment, the shape of the groove 9 is substantially triangular; preferably, the surface 13 turned towards the reference plane α is substantially plane; the surface 14 turned towards the closure lip 5 may on the other hand be substantially plane, or slightly concave.

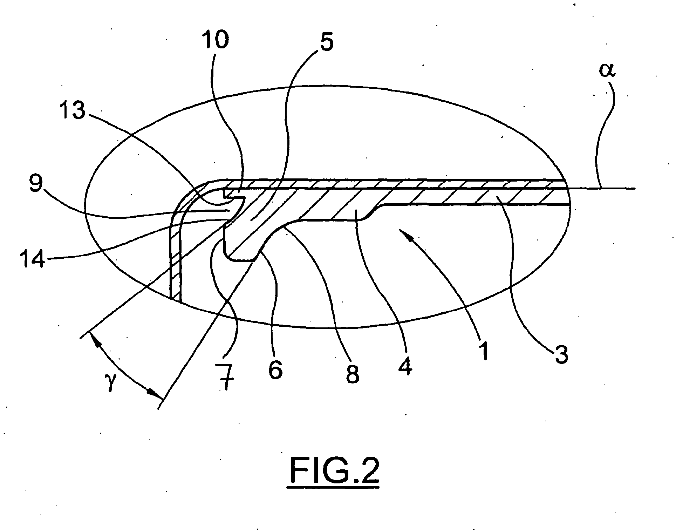

Advantageously, the surface 14 of the groove 9 and the internal surface 6 of the closure lip 5 are substantially parallel; alternatively, with reference to figure 2, the angle (y) between the tangents to the surface 13 and the internal surface 6 may be between +10 and -10 degrees.

Details which follow and relate to method and apparatus for manufacture do not form a part of the invention.

The insert 1 is advantageously made by coining a single drop of polymer, which drop has sufficient volume to embody the insert 1 when coined by an appropriate punch (not shown), which has a cavity complementary in shape to that of the insert 1 itself.

Advantageously, this is made out of a polymer selected from the group that comprises: PP, PE, PE and compounds thereof, plasticized PVC, co-polymers such as EVA (ethylene-vinyl acetate) or SBS.

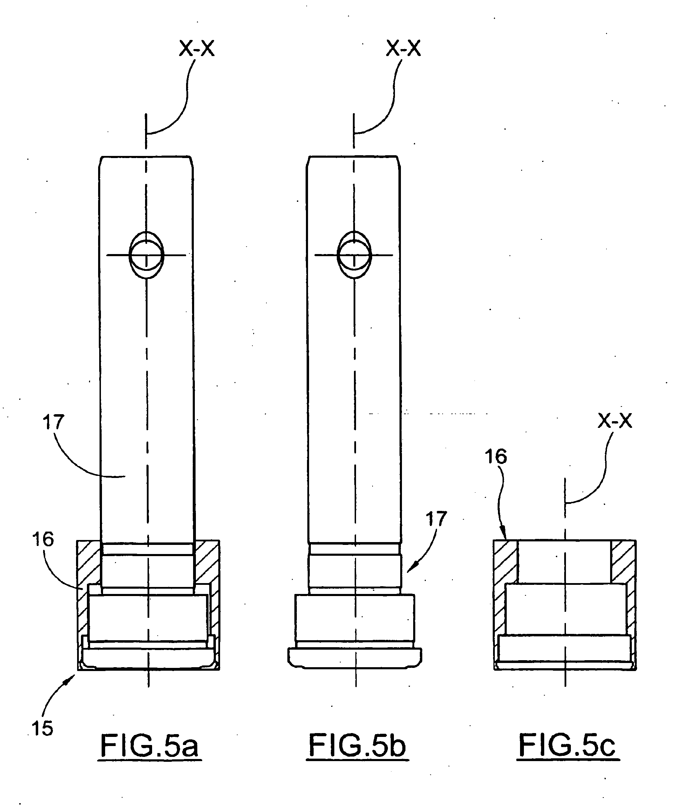

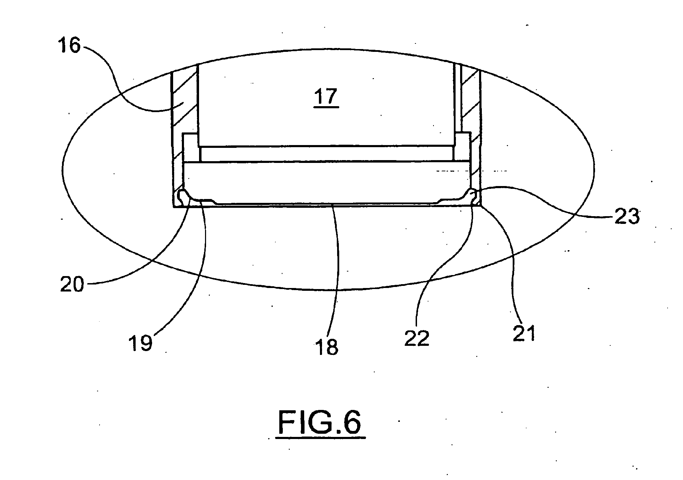

As shown in figures 5a-5c and 6, the punch 15 for manufacturing the insert 1 is made advantageously as an external tubular cylindrical bush 16 with an internal cylindrical element 17. The internal element 17 is complementary in shape to the internal surface of the insert 1 and, therefore, seen from the punch surface in the direction of the axis X-X, has a central area 18 intended to form the bottom 3 of the insert, connected to an annular peripheral area 19, behind the central area 18, intended to form the lateral edge 4 of the insert.

Continuing further in the direction of the axis X-X, the internal element 17 has a conical portion 20 intended for the manufacturing of the internal surface 6 of the insert 1.

The external tubular bush 16 is substantially cylindrical, so as to allow the internal element 17 to slide into it without the material which will form the insert 1 being able to insert itself between it and the internal element 17.

The punching surface comprises an external portion 21, substantially conical or slightly convex, which is able to substantially touch the metal of the closure 2 and, internally thereto, a plane annular portion 22, preferably made by electro-discharge machining, for manufacturing the surface 13 of the groove 9.

The surface 21 may be realized with a round surface having a very small radius, as can be seen in figures 5a and 5c, or having a substantially larger radius.

The inside of the cylindrical bush 16 has a groove 23, for manufacturing the closure lip 5 of the insert, engaging with the internal element 17.

Obviously an expert in the field, in order to meet contingent and specific requirements, may make numerous modifications and variations to the configurations described above, for example the bottom 4 could comprise an aperture, so as to give to the insert 1 an annular, rather than circular, shape; the insert 1 could be injection moulded or obtained through being coined by a disc-shaped polymer material precursor; the internal surface 6 could be concave or convex.

Such variations are comprised within the scope of the invention as defined by the following claims.

## Claims

1. Coined closure insert (1) for a drawn metal closure (2) for bottles, comprising:
- a bottom (3), able to be placed on the mouth (101) of a container (100);
- a resilient closure lip (5) comprising an internal surface (6) inclined outwards;
**characterised in that**
the external surface (7) of said closure lip (5) is substantially perpendicular to said bottom (3) and comprises a groove (9) defining an external protective rim (10).

2. Insert (1) according to the preceding claim, wherein said groove (9) is continuous.

3. Insert (1) according to any one of the preceding claims, wherein the thickness of said external protective rim (10) is smaller than the thickness of said bottom (3).

4. Insert (1) according to any one of the preceding claims, wherein said groove (9) is substantially triangular in shape.

5. Insert (1) according to any one of the preceding claims, wherein the interface between said insert (1) and the closure (2) on which said insert (1) is applied defines a reference plane (α), and the surface (13) of said groove (9) nearest to said reference plane (α) is substantially planar.

6. Insert (1) according to any one of the preceding claims, wherein the surface (14) of said groove (9) turned towards said closure lip (5) is substantially concave.

7. Insert (1) according to any one of claims 6 or 7, wherein the surface (14) of said groove (9) turned towards said closure lip (5) is substantially parallel to said internal surface (6).

8. Insert (1) according to any one of claims 6 or 7, wherein the surface (14) of said groove (9) turned towards said closure lip (5) forms an angle (γ) of less than 10 degrees with said internal surface (6).

9. Insert (1) according to the preceding claim, wherein said angle (γ) is divergent towards the outside of said insert (1).

10. Insert according to any one of the preceding claims, made up of a single piece of polymer.

## Patentansprüche

1. Geprägter Verschlusseinsatz (1) für einen gezogenen Metallverschluss (2) für Flaschen, umfassend:
- einen Boden (3), der auf der Mündung (101) eines Behälters (100) platziert werden kann;
- eine elastische Verschlusslippe (5), die eine Innenfläche (6) umfasst, die nach außen hin geneigt ist;
**dadurch gekennzeichnet, dass**
die Außenfläche (7) der Verschlusslippe (5) im Wesentlichen senkrecht zu dem Boden (3) steht und eine Nut (9) umfasst, die eine äußere Schutzkranz (10) definiert.

2. Einsatz (1) nach dem vorhergehenden Anspruch, wobei die Nut (9) durchgehend ist.

3. Einsatz (1) nach einem der vorhergehenden Ansprüche, wobei die Dicke des äußeren Schutzkranzes (10) kleiner als die Dicke des Bodens (3) ist.

4. Einsatz (1) nach einem der vorhergehenden Ansprüche, wobei die Nut (9) eine im Wesentlichen dreieckige Form aufweist.

5. Einsatz (1) nach einem der vorhergehenden Ansprüche, wobei die Grenzfläche zwischen dem Einsatz (1) und dem Verschluss (2), an welcher der Einsatz (1) aufgelegt ist, eine Bezugsebene (α) definiert, und die Fläche (13) der Nut (9) am nächsten bei der Bezugsebene (α) im Wesentlichen eben ist.

6. Einsatz (1) nach einem der vorhergehenden Ansprüche, wobei die Fläche (14) der Nut (9), die in Richtung der Verschlusslippe (5) gewandt ist, im Wesentlichen konkav ist.

7. Einsatz (1) nach einem der Ansprüche 6 oder 7, wobei die Fläche (14) der Nut (9), die in Richtung der Verschlusslippe (5) gewandt ist, im Wesentlichen parallel zu der Innenfläche (6) ist.

8. Einsatz (1) nach einem der Ansprüche 6 oder 7, wobei die Fläche (14) der Nut (9), die in Richtung der Verschlusslippe (5) gewandt ist, einen Winkel (γ) von weniger als 10 Grad mit der Innenfläche (6) bildet.

9. Einsatz (1) nach dem vorhergehenden Anspruch, wobei der Winkel (γ) in Richtung der Außenseite des Einsatzes (1) divergent ist.

10. Einsatz (1) nach einem der vorhergehenden Ansprüche, der aus einem einzigen Stück Polymer besteht.

## Revendications

1. Insert de fermeture en forme de coin (1) pour une fermeture en métal étiré (2) pour des bouteilles, comprenant :
un fond (3), pouvant être placé sur le goulot (101) d'un récipient (100) ;
une lèvre de fermeture élastique (5) comprenant une surface interne (6) inclinée vers l'extérieur ;
**caractérisé en ce que** la surface externe (7) de ladite lèvre de fermeture (5) est sensiblement perpendiculaire audit fond (3) et comprend une rainure (9) définissant une collerette de protection externe (10).

2. Insert (1) selon la revendication précédente, dans lequel ladite rainure (9) est continue.

3. Insert (1) selon l'une quelconque des revendications précédentes, dans lequel l'épaisseur de ladite collerette de protection externe (10) est inférieure à l'épaisseur dudit fond (3).

4. Insert (1) selon l'une quelconque des revendications précédentes, dans lequel ladite rainure (9) est de forme sensiblement triangulaire.

5. Insert (1) selon l'une quelconque des revendications précédentes, dans lequel l'interface entre ledit insert (1) et la fermeture (2) sur laquelle ledit insert (1) est appliqué définit un plan de référence (α), et la surface (13) de ladite rainure (9) la plus proche dudit plan de référence (α) est sensiblement plane.

6. Insert (1) selon l'une quelconque des revendications précédentes, dans lequel la surface (14) de ladite rainure (9) orientée vers ladite lèvre de fermeture (5) est sensiblement concave.

7. Insert (1) selon l'une quelconque des revendications 6 ou 7, dans lequel la surface (14) de ladite rainure (9) orientée vers ladite lèvre de fermeture (5) est sensiblement parallèle à ladite surface interne (6).

8. Insert (1) selon l'une quelconque des revendications 6 ou 7, dans lequel la surface (14) de ladite rainure (9) orientée vers ladite lèvre de fermeture (5) forme un angle (γ) de moins de 10° avec ladite surface interne (6).

9. Insert (1) selon les revendications précédentes, dans lequel ledit angle (γ) est divergent vers l'extérieur dudit insert (1).

10. Insert selon l'une quelconque des revendications précédentes, fait d'une seule pièce de polymère.
